# EUROPÄISCHE PATENTSCHRIFT

(11) **EP 4 342 829 B1**
(45) Veröffentlichungstag und Bekanntmachung des Hinweises auf die Patenterteilung: **30.04.2025**
(21) Anmeldenummer: 23197301.7
(22) Anmeldetag: 14.09.2023
(51) Int. Cl.: B65G 47/90, B25J 5/00, B25J 9/10, B65G 54/02

(54) **TRANSPORTVORRICHTUNG**
TRANSPORT DEVICE
DISPOSITIF DE TRANSPORT

(30) Priorität: 20.09.2022 DE 102022124050
(43) Veröffentlichungstag der Anmeldung: 27.03.2024
(73) Patentinhaber: Syntegon Technology GmbH, 71332 Waiblingen (DE)
(72) Erfinder: Schwandt, Matthias, 74599 Wallhausen (DE); Bäuerle, Johannes, 74423 Obersontheim (DE); Gran, Sebastian, 74564 Crailsheim (DE)
(74) Vertreter: Novagraaf Group

(56) Entgegenhaltungen:
- WO-A1-2018/176137
- DE-A1- 102014 010 917
- US-A1- 2010 047 051
- US-A1- 2019 255 698
- US-B2- 10 926 406
- US-B2- 8 104 710

## Beschreibung

Die Erfindung betrifft eine Transportvorrichtung, umfassend einen ersten Antriebskörper, einen zweiten Antriebskörper und einen Hubkörper zur Aufnahme einer Nutzlast, wobei die Antriebskörper entlang einer Transportachse oder auf einer Transportebene voneinander unabhängig ansteuerbar sind, wobei an dem ersten Antriebskörper eine erste Hubschwinge schwenkbar angelenkt ist und an dem zweiten Antriebskörper eine zweite Hubschwinge schwenkbar angelenkt ist, wobei die Hubschwingen mit dem Hubkörper wirkverbunden sind, sodass eine Relativbewegung der Antriebskörper in eine Bewegung des Hubkörpers entlang einer Hubachse umsetzbar ist.

Aus der US 2020/0030995 A1 ist es bekannt, einen Hubkörper mittels einer Parallelogramm-Kinematik oder mittels eines Zahnradgetriebes anzutreiben. Die US2020/0030995 A1 offenbart eine Transportvorrichtung gemäß dem Oberbegriff des Anspruchs 1.

Hiervon ausgehend liegt der vorliegenden Erfindung die Aufgabe zugrunde, eine Transportvorrichtung anzugeben, welche eine stabile und präzise Bewegbarkeit des Hubkörpers ermöglicht.

Diese Aufgabe wird bei einer Transportvorrichtung der eingangs genannten Art dadurch gelöst, dass an dem ersten Antriebskörper eine erste Führungsschwinge schwenkbar angelenkt ist, dass an dem zweiten Antriebskörper eine zweite Führungsschwinge schwenkbar angelenkt ist, dass die Führungsschwingen mit einem ersten Führungselement verbunden sind, dass der Hubkörper ein zweites Führungselement aufweist, und dass die Führungselemente eine Linearführung mit einer Führungsachse bilden, welche mit der Hubachse übereinstimmt.

Die erfindungsgemäße Transportvorrichtung ermöglich eine präzise, robuste und verschleißarme Führung des Hubkörpers entlang der Hubachse. Zu diesem Zweck ist ein an Führungsschwingen angelenktes erstes Führungselement vorgesehen, welches zur Führung eines zweiten Führungselements dient, das mit dem Hubkörper verbunden ist. Die beiden Führungselemente bilden eine Linearführung mit einer Führungsachse, die der Hubachse entspricht, also hinsichtlich ihrer Lage und Orientierung mit der Hubachse identisch ist.

Die Führungsschwingen sind an jeweils einem der Antriebskörper angelenkt und werden im Zuge einer Relativbewegung der beiden Antriebskörper verschwenkt, wobei das zweite Führungselement eine Hubbewegung entlang der Führungsachse ausführt.

Im einfachsten Fall erfolgt die Anlenkung der Hubschwingen und der Führungsschwingen an den jeweiligen Antriebskörpern bzw. an dem Hubkörper und dem zweiten Führungselement über einfache Schwenk- oder Drehlager, welche idealerweise als Gleitlager ausgeführt sind.

Es ist ferner bevorzugt, dass die Führungselemente ein Gleitlager bilden. Gleitlager erhöhen die Eignung der Transportvorrichtung für kritische Umgebungen, beispielsweise in Reinraumumgebungen, insbesondere bei medizinischen und pharmazeutischen Anwendungen.

Die erfindungsgemäße Transportvorrichtung zeichnet sich auch dadurch aus, dass der Hubkörper in besonders genauer Weise geführt ist, sodass eine Vielzahl von Arbeitsaufgaben des Hubkörpers umsetzbar ist. Beispielsweise können mit dem Hubkörper Anhebebewegungen, Absetzbewegungen, Füllnadelbewegungen und/oder Stopfensetzbewegungen, Öffnungsvorgänge und Schließvorgänge durchgeführt werden, wobei sowohl kleine und empfindliche Objekte gehandhabt werden können (beispielsweise Spritzen, Vials, Ampulen oder Karpulen) als auch größere Objekte (beispielsweise Petrischalen). Es können auch bestückte oder leere Behältnisträger gehandhabt und transportiert werden.

Es ist möglich, dass die beiden Antriebskörper längs einer Transportachse geführt sind, entlang der Transportachse also nur jeweils "vor" und "zurück" bewegbar sind. Es ist bevorzugt, dass es sich bei den Antriebskörpern um sogenannte "Mover" handelt, welche elektromagnetisch antreibbar sind auf einer zweidimensionalen Antriebsfläche, zu der die Antriebskörper über einen Arbeitsspalt hinweg beabstandet sind und auf welcher die Antriebskörper, der Erstreckung der Antriebsfläche entsprechend, frei bewegbar und positionierbar sind.

Die Hubachse ist vorzugsweise senkrecht zu der Transportachse oder der Transportebene orientiert, wodurch ein Nutzhub der Transporthubvorrichtung optimiert wird.

Das erste Führungselement ist vorzugsweise durch eine Hülse oder eine Schiene gebildet. Die Hülse ist insbesondere umfangsseitig geschlossen und ermöglicht eine Abstützung eines zweiten Führungselements, insbesondere eines Bolzens, der mit einer engen Spielpassung behaftet in der Hülse aufgenommen ist.

Für den Fall, dass das erste Führungselement durch eine Schiene gebildet ist, ist es bevorzugt, wenn das zweite Führungselement durch einen an der Schiene geführten Schlitten gebildet ist.

Es ist ferner bevorzugt, dass die Hubschwingen gleich lang sind und/oder dass die Führungsschwingen gleich lang sind. Hierdurch kann eine symmetrische und querkraftfreie Anordnung geschaffen werden.

Es ist ferner bevorzugt, wenn die erste Hubschwinge und die erste Führungsschwinge an dem ersten Antriebskörper um eine gemeinsame erste Schwenkachse verschwenkbar sind und/oder wenn die zweite Hubschwinge und die zweite Führungsschwinge an dem zweiten Antriebskörper um eine gemeinsame zweite Schwenkachse verschwenkbar sind. Hierdurch vereinfacht sich der Aufbau der Antriebskörper und der Schwenklager.

Eine weitere bevorzugte Ausführungsform der Erfindung sieht vor, dass der erste Antriebskörper ein erstes Drehlager mit einer zu der Hubachse parallelen ersten Drehachse aufweist und dass die erste Schwenkachse um die erste Drehachse verdrehbar gelagert ist und/oder dass der zweite Antriebskörper ein zweites Drehlager mit einer zu der Hubachse parallelen zweiten Drehachse aufweist und dass die zweite Schwenkachse um die zweite Drehachse verdrehbar gelagert ist. Solche Drehachsen sind insbesondere dann bevorzugt, wenn es sich bei den Antriebskörpern um vorgenannte "Mover" handelt. Die Erzeugung einer Hubbewegung mit gleichzeitiger (horizontaler) Verlagerung der Hubachse relativ zu der Transportebene kann dann beispielsweise auch durch Ansteuerung und Bewegung nur eines der beiden Antriebskörper erfolgen, während der andere Antriebskörper stehen bleibt und dessen Schwenklager sich um die zugehörige Drehachse verdreht.

Es ist ferner bevorzugt, wenn die Hubschwingen an ihren den Antriebskörpern jeweils beabstandeten Enden an Hubkörperschwenklagern angelenkt sind, welche zu der Hubachse mit zueinander identischen ersten Abständen angeordnet sind, und/oder wenn die Führungsschwingen an ihren den Antriebskörpern jeweils beabstandeten Enden an Führungsschwenklagern angelenkt sind, welche zu der Führungsachse mit zueinander identischen zweiten Abständen angeordnet sind. Auch diese Maßnahme trägt zu einer querkraftfreien und präzisen Führung des Hubkörpers entlang der Hubachse bei.

Die genannten ersten Abstände und die genannten zweiten Abstände sind vorzugsweise identisch, sodass eine zumindest weitestgehend kippkraftfreie Linearführung geschaffen wird.

Bei einer besonders bevorzugten Ausführungsform ist vorgesehen, dass der Hubkörper einen Nutzbereich und eine Greifvorrichtung aufweist und dass das zweite Führungselement und der Nutzbereich über ein Zusatzgetriebe miteinander verbunden sind, welches über einen Betätigungshub hinweg eine Bewegbarkeit des zweiten Führungselements relativ zu dem Nutzbereich längs der Hubachse bereitstellt, wobei die Greifvorrichtung mittels des Betätigungshubs von einer offenen Greifstellung in eine geschlossene Greifstellung überführbar ist. Dies ermöglicht es, einen Teilweg des Hubwegs des Hubkörpers nicht für eine Hubbewegung des Hubkörpers, sondern für eine Betätigung einer Greifvorrichtung zu verwenden, insbesondere ohne dass hierfür zusätzlich Aktoren erforderlich sind.

Vorzugsweise ist ein Sperrgetriebe vorgesehen, dass zwischen mindestens einer der Führungsschwingen und einem Ausleger des Nutzbereichs wirksam ist und welches eine Hubbewegung des Nutzbereichs vor Abschluss des Betätigungshubs sperrt. Das Sperrgetriebe bewirkt also eine Zwangssteuerung zur Umsetzung einer Bewegung der Antriebskörper zunächst in einen Betätigungshub, der die Greifvorrichtung betätigt, und erst anschließend in eine Hubbewegung des Hubkörpers und somit auch des Nutzbereichs sowie der Greifvorrichtung in deren betätigtem, insbesondere geschlossenem, Zustand.

Das Sperrgetriebe weist beispielsweise mindestens einen schwenkbar an einer der Führungsschwingen angelenkten Sperrfinger auf, welcher zumindest während des Betätigungshubs zwischen dem Ausleger des Nutzbereichs und einer mit dem zweiten Führungselement verbundenen Traverse wirksam ist. Dies ermöglicht eine einfach aufgebaute Zwangssteuerung, welche sich gut für eine Verwendung in Reinräumen eignet.

Weitere Merkmale und Vorteile der Erfindung sind Gegenstand der nachfolgenden Beschreibung und der zeichnerischen Darstellung von Ausführungsformen.

In der Zeichnung zeigt
- Fig. 1: eine perspektivische Ansicht einer Ausführungsform einer Transportvorrichtung;
- Fig. 2: eine der Fig. 1 entsprechende Ansicht, wobei ein Nutzbereich der Transportvorrichtung angehoben ist;
- Fig. 3: eine Vorderansicht der Transportvorrichtung in einem Zustand gemäß Fig. 1;
- Fig. 4: eine Vorderansicht der Transportvorrichtung, in einem Zustand gemäß Fig. 2;
- Fig. 5: einen Vertikalschnitt der Transportvorrichtung, in einem Zustand gemäß Fig. 1;
- Fig. 6: eine der Fig. 3 entsprechende Ansicht einer weiteren Ausführungsform einer Transportvorrichtung;
- Fig. 7: einen Vertikalschnitt der Transportvorrichtung gemäß Fig. 6;
- Fig. 8: eine der Fig. 6 entsprechende Ansicht nach Durchführung eines Betätigungshubs zur Betätigung einer Greifvorrichtung;
- Fig. 9: eine der Fig. 8 entsprechende Ansicht, nach Anheben des Nutzbereichs der Transportvorrichtung; und
- Fig. 10: eine der Fig. 3 entsprechende Ansicht einer weiteren Ausführungsform einer Transportvorrichtung.

In der Zeichnung ist eine Transportvorrichtung insgesamt mit dem Bezugszeichen 10 bezeichnet. Diese umfasst einen ersten Antriebskörper 12 und einen zweiten Antriebskörper 14. Die Antriebskörper 12 und 14 sind voneinander unabhängig ansteuerbar, beispielsweise nur entlang einer Transportachse 16 oder aber über eine Transportebene 18 hinweg.

Der erste Antriebskörper 12 trägt eine erste Schwenkachse 20, mittels welcher eine erste Hubschwinge 24 und eine erste Führungsschwinge 26 schwenkbar angelenkt sind.

Der zweite Antriebskörper 14 trägt eine zweite Schwenkachse 22, mittels welcher eine zweite Hubschwinge 28 und eine zweite Führungsschwinge 30 schwenkbar angelenkt sind.

Die erste Hubschwinge 24 und die zweite Hubschwinge 28 sind über jeweilige Hubkörperschwenklager 32 und 34 an einer Traverse 36 angelenkt. Die Traverse 36 ist mit einem Bolzen 38 verbunden, welcher sich in vertikaler Richtung erstreckt und mit einem Nutzbereich 40 eines Hubkörpers 42 verbunden ist. Der Hubkörper 42 weist Nutzabschnitte 44 auf, welche beispielsweise zum Halten von Objekten dienen.

Die den jeweiligen Schwenklagern 20 bzw. 22 beabstandeten Enden der Führungsschwingen 26 und 30 sind an jeweiligen Führungsschwenklagern 46, 48 angelenkt, die mit einer Hülse 50 verbunden sind, in welcher der Bolzen 38 verschiebbar gelagert ist.

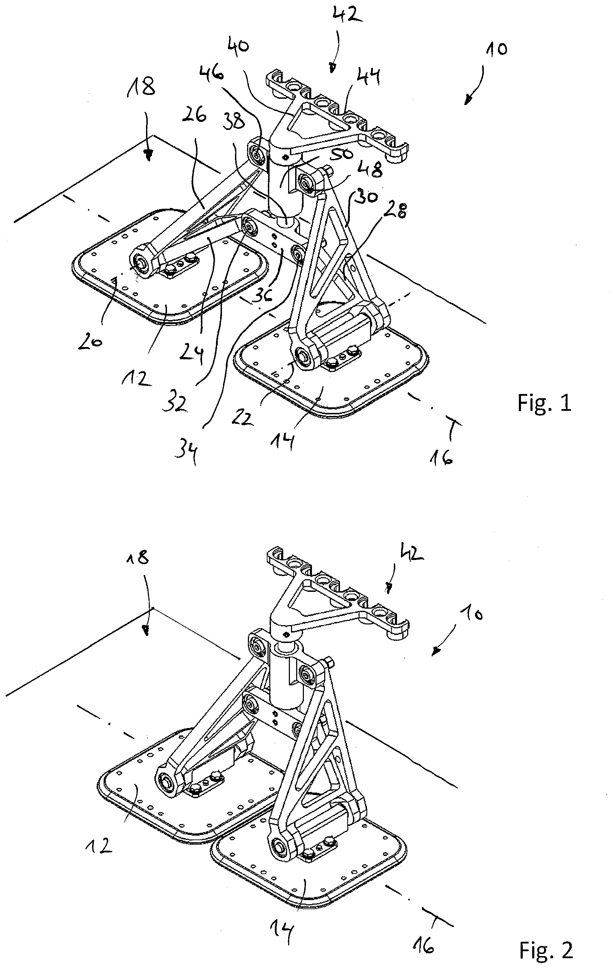

Eine Veränderung des Abstands der Antriebskörper 12 und 14, vergleiche Figuren 1 und 2 oder auch 3 und 4, führt dazu, dass die Hubschwingen 24 und 28 um die jeweiligen Schwenkachsen 20, 22 verschwenken und die Traverse 36 gemeinsam mit dem Bolzen 38 und dem Hubkörper 42 entlang einer Hubachse 52 anheben oder absenken. Gleichzeitig führt eine Veränderung des Abstands der beiden Antriebskörper 12 und 14 dazu, dass die beiden Führungsschwingen 26 und 28 ebenfalls um die Schwenklager 20, 22 verschwenken und die Hülse 50 längs einer Führungsachse 54 anheben oder absenken.

Die Führungsachse 54 und die Hubachse 52 stimmen miteinander überein, sind also hinsichtlich Ihrer Lage und Orientierung identisch.

Die Hülse 50 bildet ein erstes Führungselement 56 und der Bolzen 38 ein zweites Führungselement 58 einer Linearführung 60.

Die Hubschwingen 24 und 28 weisen vorzugsweise die gleiche Länge auf. Ferner ist es bevorzugt, wenn die Führungsschwingen 26 und 30 eine gleiche Länge aufweisen, jedoch jeweils länger sind als die Hubschwingen 24 und 28.

Die Hubkörperschwenklager 32 und 34 sind auf Höhe der Traverse 36 zu der Hubachse 52 mit ersten, zueinander identischen Abständen 62 zu der Hubachse 52 beabstandet.

Die Führungsschwenklager 46 und 48 sind zu der Führungsachse 54 mit zweiten, zueinander identischen Abständen 64 beabstandet. Vorzugsweise sind auch die ersten Abstände 62 und die zweiten Abstände 64 identisch.

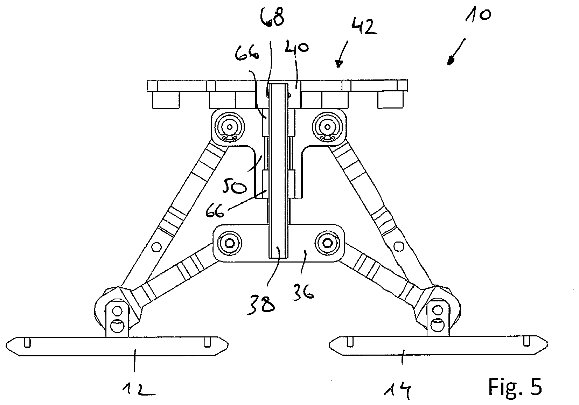

Für eine besonders präzise und reibungsarme Führung des Bolzens 38 relativ zu der Hülse 50 ist es möglich, dass die Hülse 50 Gleitlagerbuchsen 66 trägt, vergleiche Figur 5. Diese können beispielsweise aus einem reibungsarmen Kunststoff, beispielsweise PTFE, hergestellt sein.

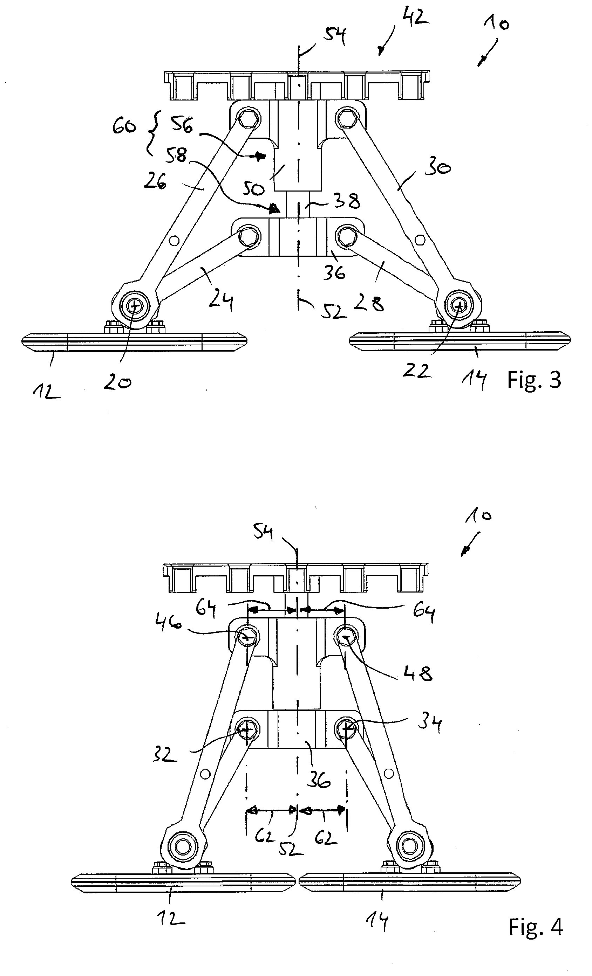

Bei dem Ausführungsbeispiel gemäß Figuren 1 bis 5 ist das zweite Führungselement 58, beispielsweise in Form des Bolzens 38, über einen Verbindungsbereich 68 unmittelbar und unbewegbar mit dem Nutzbereich 40 des Hubkörpers 42 verbunden.

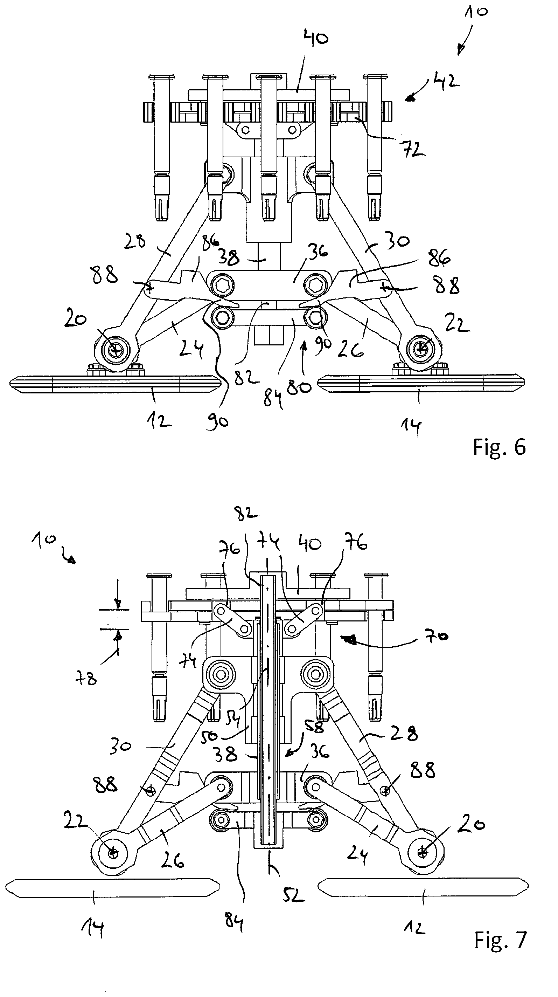

Bei einem nachfolgend unter Bezugnahme auf Figuren 6 bis 9 beschriebenen Ausführungsbeispiel ist anstelle eines starren Verbindungsbereichs 68 ein Zusatzgetriebe 70 vorgesehen, welches bewirkt, dass eine Hubbewegung des Bolzens 38 entlang der Hubachse 52 nicht vollständig in eine entsprechende Hubbewegung des Nutzbereichs 40 des Hubkörpers 42 übersetzt wird.

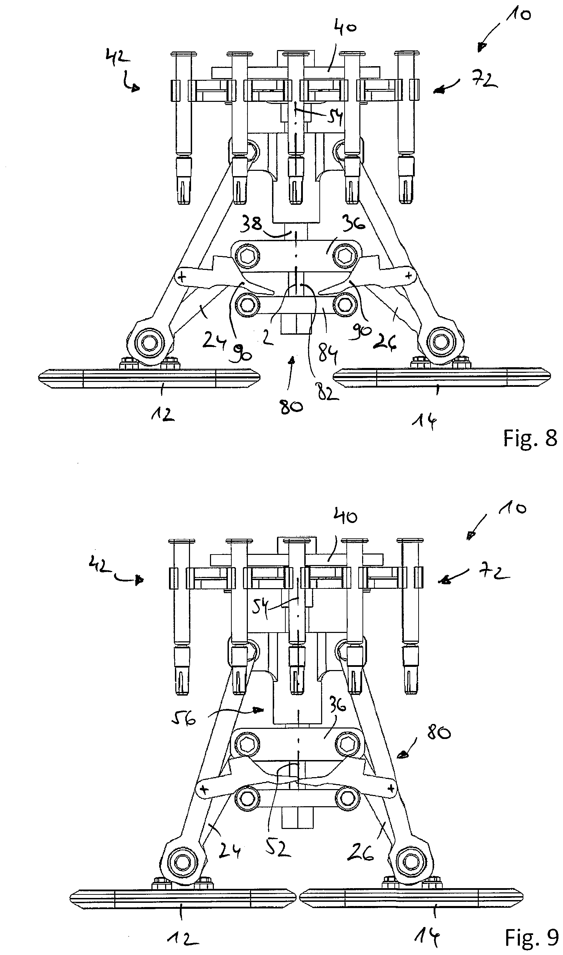

Der Hubkörper 42 der Ausführungsform gemäß Figuren 6 bis 9 weist eine Greifvorrichtung 72 auf, welche mittels des Zusatzgetriebes 70 zwischen einer offenen Greifstellung (vergleiche Figur 6) und einer geschlossenen Greifstellung (vergleiche Figur 8) betätigbar ist.

Das Zusatzgetriebe 70 weist zwei Zusatzschwingen 74 auf, welche jeweils einenends mit dem zweiten Führungselement 58, beispielsweise dem Bolzen 38, verbunden sind und anderenends mit Betätigungsabschnitten 76 der Greifvorrichtung 72. Eine Bewegung des zweiten Führungselements 58 entlang der Hubachse 52 (vergleiche ausgehend von einem Zustand gemäß Figuren 6 und 7) nach oben (vergleiche Figur 8) führt dazu, dass das zweite Führungselement 58 längs der Hubachse 52 angehoben wird, wodurch auch die Zusatzschwingen 74 angehoben werden und infolge ihrer Anlenkung an den Betätigungsabschnitten 76 diese Betätigungsabschnitte 76 in einer zu der Hubachse 52 senkrechten Betätigungsebene betätigen, wodurch die Greifvorrichtung 72 geschlossen wird.

Ein hierfür erforderlicher Betätigungshub ist in der Zeichnung (siehe Figur 7) mit dem Bezugszeichen 78 bezeichnet. Der Betrag des Betätigungshubs 78 entspricht der Verlagerung des zweiten Führungselements 58 entlang der Hubachse 52, ohne dass diese Verlagerung zu einer Hubbewegung des Nutzbereichs 40 beitragen würde.

Um zu vermeiden, dass der Nutzbereich 40 längs der Hubachse 52 angehoben wird, bevor der Betätigungshub 78 abgeschlossen ist, weist die Vorrichtung 10 ein Sperrgetriebe 80 auf. Das Sperrgetriebe 80 umfasst eine Verbindungsstange 82, vergleiche Figur 7, welche einenends mit dem Nutzbereich 40 und anderenends mit einem Ausleger 84 verbunden ist, der sich - ähnlich der Traverse 36 - quer zu der Hubachse 52 erstreckt. Es ist bevorzugt, dass die Verbindungsstange 82 innerhalb des in diesem Fall hohl ausgebildeten Bolzens 38 angeordnet ist.

Das Sperrgetriebe 80 umfasst ferner zwei Sperrfinger 86, welche über Lager 88 jeweils schwenkbar an den Führungsschwingen 28, 30 angelenkt sind.

Die Sperrfinger 86 weisen einen keilförmigen Eingriffsbereich 90 auf, der jeweils zwischen dem Ausleger 84 des Nutzbereichs 40 und der Traverse 36 wirksam ist.

Nach Abschluss des Betätigungshubs 78 führt eine weitere Verkleinerung des Abstands der Antriebskörper 12 und 14 dazu, dass die Traverse 36 weiter längs der Hubachse 52 angehoben wird, wobei jedoch nun diese Hubbewegung über das Zusatzgetriebe 70 auf den Nutzbereich 40 übertragen wird und wobei der Nutzbereich 40 über die Verbindungsstange 82 den Ausleger 84 nachführt.

Sowohl während des Betätigungshubs 78 als auch während der sich anschließenden Hubbewegung des Nutzbereichs 40 verlagert sich auch das erste Führungselement 56, beispielsweis in Form der Hülse 50, längs der Führungsachse 54.

Im Übrigen wird für den Aufbau und die Funktionsweise der Ausführungsform gemäß Figuren 6 und 9 auf die vorstehende Beschreibung zu der Transportvorrichtung 10 gemäß Figuren 1 bis 5 Bezug genommen.

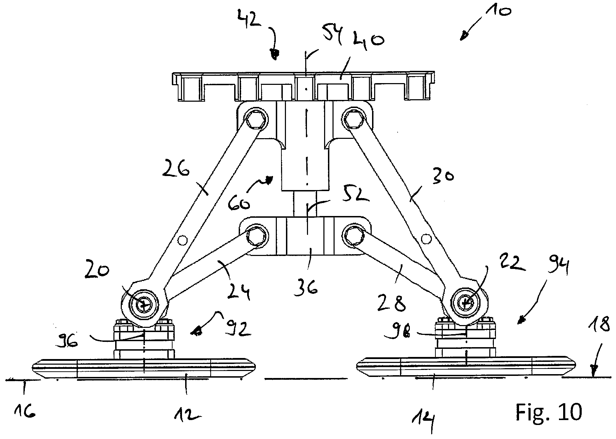

Die nachfolgend unter Bezugnahme auf Figur 10 beschriebene Transportvorrichtung 10 weist zusätzlich zu den bisher beschriebenen Transportvorrichtungen 10 jeweils mit den Antriebskörpern 12, 14 verbundene Drehlager 92 bzw. 94 auf, welche jeweils Drehachsen 96, 98 definieren, welche sich senkrecht zu der Transportachse 16 oder der Transportebene 18 erstrecken. Solche Drehlager 92, 94 können auch bei den vorstehend beschriebenen Ausführungsformen gemäß Figuren 1 bis 9 vorgesehen sein.

Im Übrigen wird für den Aufbau und die Funktionsweise der Transportvorrichtung 10 gemäß Figur 10 auf die vorstehende Beschreibung zu der Ausführungsform gemäß Figuren 1 bis 5 Bezug genommen.

## Patentansprüche

1. Transportvorrichtung (10), umfassend einen ersten Antriebskörper (12), einen zweiten Antriebskörper (14) und einen Hubkörper (42) zur Aufnahme einer Nutzlast, wobei die Antriebskörper (12, 14) entlang einer Transportachse (16) oder auf einer Transportebene (18) voneinander unabhängig ansteuerbar sind, wobei an dem ersten Antriebskörper (12) eine erste Hubschwinge (24) schwenkbar angelenkt ist und an dem zweiten Antriebskörper (14) eine zweite Hubschwinge (28) schwenkbar angelenkt ist, wobei die Hubschwingen (24, 28) mit dem Hubkörper (42) wirkverbunden sind, sodass eine Relativbewegung der Antriebskörper (12, 14) in eine Bewegung des Hubkörpers (42) entlang einer Hubachse (52) umsetzbar ist, **dadurch gekennzeichnet, dass** an dem ersten Antriebskörper (12) eine erste Führungsschwinge (26) schwenkbar angelenkt ist, dass an dem zweiten Antriebskörper (14) eine zweite Führungsschwinge (30) schwenkbar angelenkt ist, dass die Führungsschwingen (26, 30) mit einem ersten Führungselement (56) verbunden sind, dass der Hubkörper (42) ein zweites Führungselement (58) aufweist, und dass die Führungselemente (56, 58) eine Linearführung (60) mit einer Führungsachse (54) bilden, welche mit der Hubachse (52) übereinstimmt.

2. Transportvorrichtung (10) nach Anspruch 1, **dadurch gekennzeichnet, dass** die Hubachse (52) senkrecht zu der Transportachse (16) oder der Transportebene (18) orientiert ist.

3. Transportvorrichtung (10) nach einem der vorstehenden Ansprüche, **dadurch gekennzeichnet, dass** das erste Führungselement (56) durch eine Hülse (50) oder eine Schiene gebildet ist.

4. Transportvorrichtung (10) nach einem der vorstehenden Ansprüche, **dadurch gekennzeichnet, dass** das zweite Führungselement (58) durch einen Bolzen (38) oder einen Schlitten gebildet ist.

5. Transportvorrichtung (10) nach einem der vorstehenden Ansprüche, **dadurch gekennzeichnet, dass** die Führungsschwingen (26, 30) länger sind als die Hubschwingen (24, 28).

6. Transportvorrichtung (10) nach einem der vorstehenden Ansprüche, **dadurch gekennzeichnet, dass** die Hubschwingen (24, 28) gleich lang sind und/oder dass die Führungsschwingen (26, 30) gleich lang sind.

7. Transportvorrichtung (10) nach einem der vorstehenden Ansprüche, **dadurch gekennzeichnet, dass** die erste Hubschwinge (24) und die erste Führungsschwinge (26) an dem ersten Antriebskörper (12) um eine gemeinsame erste Schwenkachse (20) verschwenkbar sind und/oder dass die zweite Hubschwinge (28) und die zweite Führungsschwinge (30) an dem zweiten Antriebskörper (14) um eine gemeinsame zweite Schwenkachse (22) verschwenkbar sind.

8. Transportvorrichtung (10) nach Anspruch 7, **dadurch gekennzeichnet, dass** der erste Antriebskörper (12) ein erstes Drehlager (92) mit einer zu der Hubachse (52) parallelen ersten Drehachse (96) aufweist und dass die erste Schwenkachse (20) um die erste Drehachse (96) verdrehbar gelagert ist und/oder dass der zweite Antriebskörper (14) ein zweites Drehlager (94) mit einer zu der Hubachse (52) parallelen zweiten Drehachse (98) aufweist und dass die zweite Schwenkachse (22) um die zweite Drehachse (98) verdrehbar gelagert ist.

9. Transportvorrichtung (10) nach einem der vorstehenden Ansprüche, **dadurch gekennzeichnet, dass** die Hubschwingen (24, 28) an ihren den Antriebskörpern (12, 14) jeweils beabstandeten Enden an Hubkörperschwenklagern (32, 34) angelenkt sind, welche zu der Hubachse (52) mit zueinander identischen ersten Abständen (62) angeordnet sind, und/oder dass die Führungsschwingen (26, 30) an ihren den Antriebskörpern (12, 14) jeweils beabstandeten Enden an Führungsschwenklagern (46, 48) angelenkt sind, welche zu der Führungsachse (54) mit zueinander identischen zweiten Abständen (64) angeordnet sind.

10. Transportvorrichtung (10) nach Anspruch 9, **dadurch gekennzeichnet, dass** die ersten Abstände (62) und die zweiten Abstände (64) identisch sind.

11. Transportvorrichtung (10) nach einem der vorstehenden Ansprüche, **dadurch gekennzeichnet, dass** der Hubkörper (42) einen Nutzbereich (40) und eine Greifvorrichtung (72) aufweist und dass das zweite Führungselement (58) und der Nutzbereich (40) über ein Zusatzgetriebe (70) miteinander verbunden sind, welches über einen Betätigungshub (78) hinweg eine Bewegbarkeit des zweiten Führungselements (58) relativ zu dem Nutzbereich (40) längs der Hubachse (52) bereitstellt, wobei die Greifvorrichtung (72) mittels des Betätigungshubs (78) von einer offenen Greifstellung in eine geschlossene Greifstellung überführbar ist.

12. Transportvorrichtung (10) nach Anspruch 11, **dadurch gekennzeichnet, dass** ein Sperrgetriebe (80) vorgesehen ist, das zwischen mindestens einer der Führungsschwingen (26, 30) und einem Ausleger (84) des Nutzbereichs (40) wirksam ist und welches eine Hubbewegung des Nutzbereichs (40) vor Abschluss des Betätigungshubs (78) sperrt.

13. Transportvorrichtung (10) nach Anspruch 12, **dadurch gekennzeichnet, dass** das Sperrgetriebe (80) mindestens einen schwenkbar an einer der Führungsschwingen (26, 30) angelenkten Sperrfinger (86) umfasst, welcher zumindest während des Betätigungshubs (78) zwischen dem Ausleger (84) des Nutzbereichs (40) und einer mit dem zweiten Führungselement (58) verbundenen Traverse (36) wirksam ist.

## Claims

1. Conveying device (10) comprising a first drive body (12), a second drive body (14) and a lifting body (42) for receiving a payload, the drive bodies (12, 14) being able to be activated independently of each other along a conveying axis (16) or on a conveying plane (18), a first lifting link (24) being pivotally articulated to the first drive body (12) and a second lifting link (28) being pivotally articulated to the second drive body (14), the lifting links (24, 28) being functionally connected to the lifting body (42), so that a relative movement of the drive bodies (12, 14) can be converted into a movement of the lifting body (42) along a lifting axis (52), **characterized in that** a first guide link (26) is pivotally articulated to the first drive body (12), **in that** a second guide link (30) is pivotally articulated to the second drive body (14), **in that** the guide links (26, 30) are connected to a first guide element (56), **in that** the lifting body (42) has a second guide element (58), **and in that** the guide elements (56, 58) form a linear guide (60) with a guide axis (54) which coincides with the lifting axis (52).

2. Conveying device (10) according to claim 1, **characterized in that** the lifting axis (52) is oriented perpendicularly to the conveying axis (16) or the conveying plane (18).

3. Conveying device (10) according to either of the preceding claims,
**characterized in that** the first guide element (56) is formed by a sleeve (50) or a rail.

4. Conveying device (10) according to any of the preceding claims,
**characterized in that** the second guide element (58) is formed by a pin (38) or a carriage.

5. Conveying device (10) according to any of the preceding claims,
**characterized in that** the guide links (26, 30) are longer than the lifting links (24, 28).

6. Conveying device (10) according to any of the preceding claims,
**characterized in that** the lifting links (24, 28) are of equal length **and/or in that** the guide links (26, 30) are of equal length.

7. Conveying device (10) according to any of the preceding claims,
**characterized in that** the first lifting link (24) and the first guide link (26) on the first drive body (12) can be swiveled about a common first pivot shaft (20) **and/or in that** the second lifting link (28) and the second guide link (30) on the second drive body (14) can be swiveled about a common second pivot shaft (22).

8. Conveying device (10) according to claim 7, **characterized in that** the first drive body (12) has a first rotary bearing (92) with a first axis (96) of rotation parallel to the lifting axis (52) **and in that** the first pivot shaft (20) is mounted so as to be rotatable about the first axis (96) of rotation **and/or in that** the second drive body (14) has a second rotary bearing (94) with a second axis (98) of rotation parallel to the lifting axis (52) **and in that** the second pivot shaft (22) is mounted so as to be rotatable about the second axis (98) of rotation.

9. Conveying device (10) according to any of the preceding claims,
**characterized in that** the lifting links (24, 28), at the respective ends thereof which are at a distance from the drive bodies (12, 14), are articulated to lifting body pivot bearings (32, 34) which are arranged at mutually identical first distances (62) from the lifting axis (52), **and/or in that** the guide links (26, 30), at the respective ends thereof which are at a distance from the drive bodies (12, 14), are articulated to guide pivot bearings (46, 48) which are arranged at mutually identical second distances (64) from the guide axis (54).

10. Conveying device (10) according to claim 9, **characterized in that** the first distances (62) and the second distances (64) are identical.

11. Conveying device (10) according to any of the preceding claims,
**characterized in that** the lifting body (42) has a work region (40) and a gripping device (72), **and in that** the second guide element (58) and the work region (40) are connected to each other via an additional gear mechanism (70) which allows the second guide element (58) to move relative to the work region (40) along the lifting axis (52) over an actuation stroke (78), the gripping device (72) being transferable from an open grip position to a closed grip position by means of the actuation stroke (78).

12. Conveying device (10) according to claim 11, **characterized in that** a locking mechanism (80) is provided, which operates between at least one of the guide links (26, 30) and an arm (84) of the work region (40) and blocks a lifting movement of the work region (40) until the actuation stroke (78) is completed.

13. Conveying device (10) according to claim 12, **characterized in that** the locking mechanism (80) comprises at least one locking finger (86) which is pivotably articulated to one of the guide links (26, 30) and operates, at least during the actuation stroke (78), between the arm (84) of the work region (40) and a crosspiece (36) connected to the second guide element (58).

## Revendications

1. Dispositif de transport (10), comprenant un premier corps d'entraînement (12), un second corps d'entraînement (14) et un corps de levage (42) pour la réception d'une charge utile, dans lequel les corps d'entraînement (12, 14) peuvent être commandés indépendamment l'un de l'autre le long d'un axe de transport (16) ou sur un plan de transport (18), dans lequel une première bielle de levage (24) est articulée de manière à pouvoir pivoter sur le premier corps d'entraînement (12) et une seconde bielle de levage (28) est articulée de manière à pouvoir pivoter sur le second corps d'entraînement (14), dans lequel les bielles de levage (24, 28) sont reliées de manière fonctionnelle au corps de levage (42), de sorte qu'un mouvement relatif des corps d'entraînement (12, 14) peut être transformé en un mouvement du corps de levage (42) le long d'un axe de levage (52), **caractérisé en ce qu'**une première bielle de guidage (26) est articulée de manière à pouvoir pivoter sur le premier corps d'entraînement (12), **en ce qu'**une seconde bielle de guidage (30) est articulée de manière à pouvoir pivoter sur le second corps d'entraînement (14), **en ce que** les bielles de guidage (26, 30) sont reliées à un premier élément de guidage (56), **en ce que** le corps de levage (42) présente un second élément de guidage (58), et **en ce que** les éléments de guidage (56, 58) forment un guidage linéaire (60) comportant un axe de guidage (54) qui coïncide avec l'axe de levage (52).

2. Dispositif de transport (10) selon la revendication 1,
**caractérisé en ce que** l'axe de levage (52) est orienté perpendiculairement à l'axe de transport (16) ou au plan de transport (18).

3. Dispositif de transport (10) selon l'une des revendications précédentes, **caractérisé en ce que** le premier élément de guidage (56) est formé par un manchon (50) ou un rail.

4. Dispositif de transport (10) selon l'une des revendications précédentes, **caractérisé en ce que** le second élément de guidage (58) est formé par un boulon (38) ou un coulisseau.

5. Dispositif de transport (10) selon l'une des revendications précédentes, **caractérisé en ce que** les bielles de guidage (26, 30) sont plus longues que les bielles de levage (24, 28).

6. Dispositif de transport (10) selon l'une des revendications précédentes, **caractérisé en ce que** les bielles de levage (24, 28) sont de même longueur **et/ou en ce que** les bielles de guidage (26, 30) sont de même longueur.

7. Dispositif de transport (10) selon l'une des revendications précédentes, **caractérisé en ce que** la première bielle de levage (24) et la première bielle de guidage (26) peuvent pivoter sur le premier corps d'entraînement (12) autour d'un premier axe de pivotement commun (20) **et/ou en ce que** la seconde bielle de levage (28) et la seconde bielle de guidage (30) peuvent pivoter sur le second corps d'entraînement (14) autour d'un second axe de pivotement commun (22).

8. Dispositif de transport (10) selon la revendication 7,
**caractérisé en ce que** le premier corps d'entraînement (12) présente un premier palier rotatif (92) comportant un premier axe de rotation (96) parallèle à l'axe de levage (52) **et en ce que** le premier axe de pivotement (20) est monté de manière à pouvoir tourner autour du premier axe de rotation (96) **et/ou en ce que** le second corps d'entraînement (14) présente un second palier rotatif (94) comportant un second axe de rotation (98) parallèle à l'axe de levage (52) **et en ce que** le second axe de pivotement (22) est monté de manière à pouvoir tourner autour du second axe de rotation (98).

9. Dispositif de transport (10) selon l'une des revendications précédentes, **caractérisé en ce que** les bielles de levage (24, 28) sont articulées, à leurs extrémités respectivement espacées des corps d'entraînement (12, 14), sur des paliers de pivotement de corps de levage (32, 34) qui sont disposés à des premières distances (62) identiques entre elles par rapport à l'axe de levage (52), **et/ou en ce que** les bielles de guidage (26, 30) sont articulées, à leurs extrémités respectivement espacées des corps d'entraînement (12, 14), sur des paliers de pivotement de guidage (46, 48) qui sont disposés à des secondes distances (64) identiques entre elles par rapport à l'axe de guidage (54).

10. Dispositif de transport (10) selon la revendication 9,
**caractérisé en ce que** les premières distances (62) et les secondes distances (64) sont identiques.

11. Dispositif de transport (10) selon l'une des revendications précédentes, **caractérisé en ce que** le corps de levage (42) présente une zone utile (40) et un dispositif de préhension (72) **et en ce que** le second élément de guidage (58) et la zone utile (40) sont reliés entre eux par l'intermédiaire d'un engrenage supplémentaire (70) qui fournit, sur une course d'actionnement (78), une mobilité du second élément de guidage (58) par rapport à la zone utile (40) le long de l'axe de levage (52), dans lequel le dispositif de préhension (72) peut être transféré d'une position de préhension ouverte à une position de préhension fermée au moyen de la course d'actionnement (78).

12. Dispositif de transport (10) selon la revendication 11,
**caractérisé en ce qu'**un engrenage de blocage (80) est prévu, lequel agit entre au moins l'une des bielles de guidage (26, 30) et un bras (84) de la zone utile (40) et lequel bloque un mouvement de levage de la zone utile (40) avant la fin de la course d'actionnement (78).

13. Dispositif de transport (10) selon la revendication 12,
**caractérisé en ce que** l'engrenage de blocage (80) comprend au moins un doigt de blocage (86) articulé de manière à pouvoir pivoter sur l'une des bielles de guidage (26, 30) et qui agit au moins pendant la course d'actionnement (78) entre le bras (84) de la zone utile (40) et une traverse (36) reliée au second élément de guidage (58).
